# EUROPÄISCHE PATENTSCHRIFT

(11) **EP 3 183 937 B1**
(45) Veröffentlichungstag und Bekanntmachung des Hinweises auf die Patenterteilung: **19.06.2024**
(21) Anmeldenummer: 15750248.5
(22) Anmeldetag: 06.08.2015
(51) Int. Cl.: H04W 84/12, H04W 4/46, H04W 88/12, H04B 7/155, H04L 67/12, H04W 48/16, H04W 80/08, H04W 84/18, H04W 84/00, H04W 92/20

(54) **VERFAHREN ZUM AUFBAU EINES FAHRZEUG-NETZWERKS**
METHOD FOR ESTABLISHING A VEHICLE NETWORK
PROCÉDÉ D'ÉTABLISSEMENT D'UN RÉSEAU DE VÉHICULES

(30) Priorität: 22.08.2014 DE 102014012673
(43) Veröffentlichungstag der Anmeldung: 28.06.2017
(73) Patentinhaber: ZF CV Systems Europe BV, 1170 Brussels (BE)
(72) Erfinder: DIECKMANN, Thomas, 30982 Pattensen (DE); GLAVINIC, Andelko, 31157 Sarstedt (DE); HÜBNER, Sören, 26345 Bockhorn (DE); KÜHNE, Sebastian, 31157 Sarstedt (DE); LAUDE, Ulf, 29313 Hambühren (DE); WOLF, Thomas, 30890 Barsinghausen (DE)
(74) Vertreter: Rabe, Dirk-Heinrich
(86) Internationale Anmeldenummer: PCT/EP2015/001625
(87) Internationale Veröffentlichungsnummer: WO 2016/026553

(56) Entgegenhaltungen:
- EP-A2- 1 914 146
- EP-A2- 1 914 146
- EP-A2- 1 914 146
- US-A1- 2013 215 747
- US-A1- 2013 215 747
- US-A1- 2013 215 747
- Calvin Chuko: "WHITE PAPER Create Error-free Inter- carriage Connections Automatically", , 2. August 2011 (2011-08-02), Seiten 1-7, XP055216699, Brea, CA, USA Gefunden im Internet: URL:http://www.modelec.nl/file.php/1040/cr eate error-free inter-carriage connections automatically.pdf [gefunden am 2015-09-28]
- Calvin Chuko: "WHITE PAPER Create Error-free Inter- carriage Connections Automatically", , 2. August 2011 (2011-08-02), Seiten 1-7, XP055216699, Brea, CA, USA Gefunden im Internet: URL:http://www.modelec.nl/file.php/1040/cr eate error-free inter-carriage connections automatically.pdf [gefunden am 2015-09-28]
- Calvin Chuko: "WHITE PAPER Create Error-free Inter- carriage Connections Automatically", , 2 August 2011 (2011-08-02), pages 1-7, XP055216699, Brea, CA, USA Retrieved from the Internet: URL:http://www.modelec.nl/file.php/1040/cr eate error-free inter-carriage connections automatically.pdf [retrieved on 2015-09-28]

## Beschreibung

Die Erfindung betrifft ein Verfahren zum Aufbau eines Fahrzeug-Netzwerks für mehrere, per Funk miteinander verbundene Fahrzeuge.

In einem typischen WLAN-Funknetz nach dem Standard IEEE 802.11 sind mehrere sogenannte Clients mit einem Access Point verbunden. Die Clients können über den Access Point auf andere, mit dem Access Point verbundene Geräte (auch Clients) zugreifen. Der Access Point kann beispielsweise zugleich den Zugang zum Internet herstellen (WLAN-Router).

Jeder Teilnehmer im Netzwerk hat eine eigene Netzwerkadresse (IP-Adresse) und ist mit dieser Netzwerkadresse eindeutig identifizierbar und ansprechbar. Für die Herstellung und Aufrechterhaltung der drahtlosen Verbindung zwischen dem Access Point und den Clients sendet der Access Point seine Funknetzkennung (SSID). Die Clients müssen sich mit der Funknetzkennung des Access Points und bei verschlüsselter Verbindung auch mit einem Kennwort am Access Point anmelden.

Bereits bekannt ist die Nutzung einer WLAN-Verbindung zum Abruf von in einem Fahrzeug vorliegenden Daten. Es existieren spezielle Schnittstellen zur Verbindung eines WLAN-Netzwerks mit einem Daten-Bus (z. B. CAN-Bus) eines Fahrzeugs. Ebenfalls bekannt ist die Anordnung mehrerer Access Points innerhalb eines Fahrzeugs, wobei die Access Points parallel zueinander über Leitungen mit einem Server verbunden sind. Benutzer können sich über eigene Clients drahtlos mit einem der Access Points verbinden, siehe EP 1 337 055 A2.

Bereits bekannt ist auch die Verbindung stationärer WLAN-Router per WDS (Wireless Distribution System), zum Beispiel die Verbindung zweier WLAN-Router des Typs Fritz!Box 7170 des Herstellers AVM, Berlin, Deutschland. Bei WDS handelt es sich um ein Verfahren zur Adressierung in einem WLAN. Per WDS können auch mehrere Access Points im selben Netzwerk miteinander korrespondieren.

EP 1 914 146 A2 offenbart ein Verfahren zur drahtlosen Übermittlung von Informationen, die insbesondere Teil einer Internetverbindung sind, zwischen Eisenbahnwagen eines Zuges. Dabei tritt ein Sende-Empfangs-Modul eines Eisenbahnwagens mit einem Sende-Empfangs-Modul eines anderen Eisenbahnwagens in Verbindung. Es ist vorgesehen, das ein Sende-Empfangs-Modul mit dem nächstgelegenen funktionierenden Sende-Empfangs-Modul im Zug in Verbindung tritt.

Aufgabe der vorliegenden Erfindung ist die Schaffung eines Fahrzeug-Netzwerks über mehrere Fahrzeuge. Vorzugsweise soll ein Benutzer mit einem drahtlosen Client mit dem Netzwerk verbindbar sein. Ebenfalls vorzugsweise soll das Netzwerk in der Lage sein mehr als zwei Fahrzeuge aufzunehmen. Angestrebt ist eine möglichst hohe Reichweite entlang der Fahrzeuge.

Ein Fahrzeug-Netzwerk ist für mehrere miteinander verbundene Fahrzeuge vorgesehen, wobei das Netzwerk als WLAN realisiert ist und mindestens zwei Access Points aufweist, wobei die Access Points drahtlos miteinander verbunden sind, also ohne kabelgebundenen Backbone, und wobei die Access Points jeweils dieselbe Funknetzkennung verwenden und so für WLAN-Clients nur ein einziges sichtbares Netzwerk bilden.

Die Access Points bilden einen gemeinsamen IP-Adressraum. Die Kommunikation zwischen den Access Points erfolgt per WDS. Dabei ist es nicht erforderlich, dass jeder Access Point mit jedem anderen Access Point des Netzwerks verbunden ist. Vielmehr ist auch eine Linien-Topologie möglich, ebenso eine vermaschte Topologie bis hin zu einem vollvermaschten Netzwerk aus Access Points.

In einem sogenannten Road Train können relativ viele Anhängefahrzeuge von einer Zugmaschine gezogen werden. Die Länge des Road Trains kann leicht die typische Funkreichweite eines Access Points übersteigen. Mit der Erfindung ist der Aufbau eines drahtlosen Netzwerks auch für derart lange Road Trains möglich.

Wenigstens ein WLAN-Client kann Teil des Netzwerks sein. Vorzugsweise werden Anmeldeinformationen des Clients von Access Point zu Access Point unverändert übergeben.

Die Access Points in dem Netzwerk verwenden jeweils dieselbe Funknetzkennung (SSID), trotz verschiedener Netzwerkadressen. Dies ermöglicht die einfache Einbindung eines WLAN-Clients als Teil des Netzwerks. Der WLAN-Client sieht nur ein Netzwerk und kann von einem Access Point zum nächsten übergehen. Die drahtlose Verbindung zum Netzwerk bleibt dabei erhalten. Die Access Points tauschen die Anmeldeinformationen des Clients untereinander aus. Vorzugsweise handelt es sich dabei zumindest um die sogenannte MAC-Adresse des Clients. Auf diese Weise kann ein Fahrer mit seinem WLAN-fähigen Endgerät, zum Beispiel einem Smartphone, Teilnehmer des Netzwerks sein, unabhängig von seiner Position und seiner Entfernung zu einem bestimmten Fahrzeug.

Es kann vorgesehen sein, dass zueinander benachbarte Fahrzeuge des Netzwerks auch körperlich (physisch) miteinander verbunden sind und Signale über physische Leitungen austauschen können. Physisch miteinander verbunden sind in der Regel nur Fahrzeuge, die aneinander angehängt sind, wie bei einem Lastzug mit zwei oder drei Fahrzeugen oder bei einem Road Train mit drei oder mehr Fahrzeugen. In einem Road Train sind die Endfahrzeuge (erstes und letztes Fahrzeug) je nur mit einem anderen Fahrzeug physisch verbunden, während alle übrigen Fahrzeuge jeweils mit zwei anderen Fahrzeugen verbunden sind. Typischerweise bestehen Verbindungen in Gestalt der üblichen Anhängevorrichtungen und zusätzlich über elektrische Leitungen und pneumatische Leitungen in Fahrzeugen mit pneumatischen Bremsanlagen. Über die elektrischen und pneumatischen Leitungen oder andere physische Leitungen können Signale von Fahrzeug zu Fahrzeug ausgetauscht werden. Diese Signale können beispielsweise zur Bestätigung einer physischen Verbindung der Fahrzeuge genutzt werden.

Es ist möglich, dass jedem Access Point ein elektronisches Steuergerät (ECU) zugeordnet ist, wobei in den Steuergeräten verfügbare Daten über wenigstens einen der Access Points auslesbar sind, insbesondere über jeden Access Point. Dadurch können die in den Fahrzeugen anfallenden Daten auf einfache Weise von einem WLAN-Client gelesen werden. Access Points und Client müssen jeweils aufeinander abgestimmte Software aufweisen.

Bevorzugt ist die Ausbildung und Unterstützung einer Datenaustauschschicht (Data Exchange Layer), so dass von jedem Fahrzeug aus auf die Gesamtheit der Daten aller Fahrzeuge zugegriffen werden kann, ohne dass proprietäre Hardware verwendet werden muss.

Das erfindungsgemäße Verfahren zum Aufbau des Fahrzeug-Netzwerks aus wenigstens zwei Access Points und einem WLAN-Client, insbesondere eines zuvor beschriebenen Fahrzeug-Netzwerks, weist die Merkmale des Anspruchs 1 auf. Vorgesehen sind zumindest folgende Schritte:
a) der WLAN-Client erfasst Verbindungsdaten eines Access Points eines ersten Fahrzeugs (z.B. einer Zugmaschine) und eines Access Points eines zweiten Fahrzeugs (z.B. eines ersten Anhängers), jeweils umfassend eine Funknetzkennung des jeweiligen Access Points,
b) der WLAN-Client verbindet sich mit dem Access Point des zweiten Fahrzeugs,
c) der WLAN-Client sendet Verbindungsdaten des Access Points des ersten Fahrzeugs, einschließlich der Funknetzkennung des Access Points des ersten Fahrzeugs,
   an den Access Point des zweiten Fahrzeugs,
d) der Access Point des zweiten Fahrzeugs nimmt die Funknetzkennung des Access Points des ersten Fahrzeugs an, verbindet sich mit dem Access Point des ersten Fahrzeugs per WDS und bildet so mit dem Access Point des ersten Fahrzeugs ein einziges für den WLAN-Client sichtbares Netzwerk.

Im Ergebnis liegt ein drahtloses Fahrzeug-Netzwerk aus einem WLAN-Client und zwei Access Points vor, wobei die Access Points den Fahrzeugen zugeordnet sind. Der WLAN-Client ist vorzugsweise einem mobilen Gerät außerhalb der Fahrzeuge zugeordnet. Das erste Fahrzeug muss nicht das vorderste Fahrzeug die Zugmaschine eines Lastzuges sein, obwohl dies bevorzugt wird. Grundsätzlich handelt es sich um das Fahrzeug, dessen Verbindungsdaten zuerst erfasst werden und/oder dessen Funknetzkennung auch von anderen Fahrzeugen verwendet wird.

Die Access Points sind so ausgebildet und weisen die erforderliche Hardware und Software auf, um per WDS mit einem anderen Access Point zu kommunizieren und dabei auch vom Client erhaltene Daten für den Aufbau und für die Durchführung der Verbindung zu verwenden. Entsprechend weist der Client Hardware und Software auf, um Verbindungsdaten und Zugangsdaten der Access Points aufzunehmen und an andere Access Points des Netzwerks zu übergeben.

Nach einem weiteren Gedanken der Erfindung werden bei Einbeziehung eines weiteren Fahrzeugs folgende Schritte durchgeführt:
a) der WLAN-Client verbindet sich mit einem Access Point des weiteren Fahrzeugs,
b) der WLAN-Client sendet die Verbindungsdaten des Access Points des ersten Fahrzeugs einschließlich der Funknetzkennung des Access Points des ersten Fahrzeugs oder die Verbindungsdaten des Access Points des zweiten Fahrzeugs einschließlich der Funknetzkennung des Access Points des zweiten Fahrzeugs an den Access Point des weiteren Fahrzeugs, damit dieser Access Point die Funknetzkennung der Access Points des Netzwerks annehmen und per WDS eine Verbindung zu wenigstens einem der Access Points des Netzwerks herstellen kann,
c) der Access Point des weiteren Fahrzeugs nimmt die Funknetzkennung der Access Points des Netzwerks an, verbindet sich mit wenigstens einem der Access Points des ersten Fahrzeugs und des zweiten Fahrzeugs per WDS und wird so Teil des für den WLAN-Client sichtbaren Netzwerks.

Es entsteht ein Netzwerk aus mehr als zwei Access Points mit derselben Funknetzkennung. Der WLAN-Client kann sich an beliebiger Stelle mit den Access Points unter Verwendung der gemeinsamen Funknetzkennung verbinden. Besteht die Verbindung mit einem Access Point außerhalb des ersten Fahrzeugs und ist ein Zugriff auf den Access Point des ersten Fahrzeugs gewünscht, wirkt der verbundene Access Point als Repeater. Das Gleiche gilt für Access Points, die zwischen dem Access Point des ersten Fahrzeugs und dem mit dem Client verbundenen Access Point liegen. Die Access Points ermöglichen eine Verbindung zwischen dem Client und dem außerhalb der normalen Reichweite des Clients liegenden Access Point des ersten Fahrzeugs. Außerdem kann der Client über seinen (nächsten) Access Point auf die Daten der anderen Access Points und deren Clients anhand der jeweils verschiedenen Netzwerkadressen zugreifen.

Nach einem weiteren Gedanken der Erfindung ist vorgesehen, dass die Fahrzeuge auch physisch miteinander verbunden sind, dass nach dem Aufbau einer WLAN-Verbindung zwischen den Access Points zweier Fahrzeuge geprüft wird, ob auch Signale zwischen den beiden Fahrzeugen über physische Leitungen übertragbar sind, und dass die WLAN-Verbindung zwischen den Access Points nur beibehalten wird, wenn die Prüfung der Übertragung von Signalen über die physischen Leitungen erfolgreich ist. Mittels der physischen Leitungen erfolgt eine Autorisierung der drahtlosen Verbindung. Dadurch kann vermieden werden, dass irrtümlich ein drahtloses Netzwerk aus eng beieinander stehenden Fahrzeugen gebildet wird, obwohl diese Fahrzeuge nicht aneinander angehängt bzw. nicht physisch miteinander verbunden sind.

Nach einem weiteren Gedanken der Erfindung ist vorgesehen, dass der WLAN-Client die Verbindungsdaten des Access Points eines der Fahrzeuge wenigstens mittelbar drahtlos erfasst, insbesondere per Funk oder optisch mit einer Kamera. Zu den Verbindungsdaten zählen insbesondere die Funknetzkennung (SSID) und Informationen über die Verschlüsselung (Netzwerkschlüssel). Außerdem kann eine eindeutige Kennzeichnung Teil der Verbindungsdaten sein, etwa eine Fahrgestell-Nummer, ein Fahrzeug-Kennzeichen oder dergleichen. Optisch lesbare Verbindungsdaten können beispielsweise als QR-Code, als Balken-Code am Fahrzeug verfügbar sein. Für die optische Erfassung der Verbindungsdaten weist der Client vorzugsweise eine Kamera mit Bildverarbeitung auf. Möglich ist auch ein Auslesen durch Funktechniken wie WPS (Wi-Fi Protected Setup), NFC (Near Field Communication), RFID (Radio Frequency Identification), Bluetooth oder ähnliche Funktechnologien. Im jeweiligen Fahrzeug ist dann ein Sender vorhanden, dessen Daten von einem Empfänger am Client lesbar sind. Entsprechend müssen Client und Sender am Fahrzeug technologisch aufeinander abgestimmt sein.

Nach einem weiteren Gedanken der Erfindung ist vorgesehen, dass der WLAN-Client die Verbindungsdaten des Access Points eines der Fahrzeuge von einem Server lädt, und dass der Zugriff auf den Server unter Verwendung der vom WLAN-Client zuvor drahtlos erfassten Daten erfolgt. Vorzugsweise ist der Client in diesem Fall über eine zusätzliche drahtlose Verbindung mit dem Server verbunden, beispielsweise per Mobilfunk mit einem über das Internet erreichbaren Server. Dadurch ist eine zusätzliche Absicherung erzielbar. Der Client erfasst die Verbindungsdaten nicht unmittelbar an einem Fahrzeug. Vielmehr liest der Client zunächst Daten an diesem Fahrzeug, optisch oder per Funk, und sendet diese Daten an den Server. Letzterer prüft die Daten, gegebenenfalls die Berechtigung des Clients und sendet daraufhin die Verbindungsdaten für das jeweilige Fahrzeug und den zugehörigen Access Point an den Client zurück. Im Server können verschiedene Nebenbedingungen, Berechtigungen und Restriktionen hinterlegt sein. Beispielsweise kann geprüft werden, ob der Client auf ein bestimmtes Fahrzeug zugreifen darf, ob Kalender- und Tageszeiten-abhängige Berechtigungen eingehalten werden.

Ein elektronisches Steuergerät für ein Fahrzeug mit elektronischem Bremssystem kann einem dem Steuergerät zugeordneten Access Point aufweisen, wobei der Access Point seine Funknetzkennung ändern und per WDS mit anderen Access Points kommunizieren kann. Bekannt sind elektronische Steuergeräte für elektronische Bremssysteme, letztere insbesondere in Verbindung mit pneumatischen Bremsanlagen. Die Steuergeräte erhalten Daten von angeschlossenen Sensoren und/oder sind über ein Datenbussystem (CAN-Bus) mit anderen Geräte und Einrichtungen im Fahrzeug verbunden. Ein Client kann über den Access Point oder über einen anderen, verbundenen Access Point auf die am Steuergerät vorhandenen Informationen zugreifen.

Vorteilhafte Ausführungsformen der Erfindung werden nachfolgend anhand von Zeichnungen näher erläutert. Es zeigen:
- Fig. 1: einen Lastzug mit drahtlosem Fahrzeug-Netzwerk,
- Fig. 2 bis 5: die Abfolge beim Aufbau eines Teils des Fahrzeug-Netzwerks gemäß Fig. 1,
- Fig. 6: ein Netzwerk mit Linien-Topologie,
- Fig. 7: ein Netzwerk mit vermaschter Topologie.

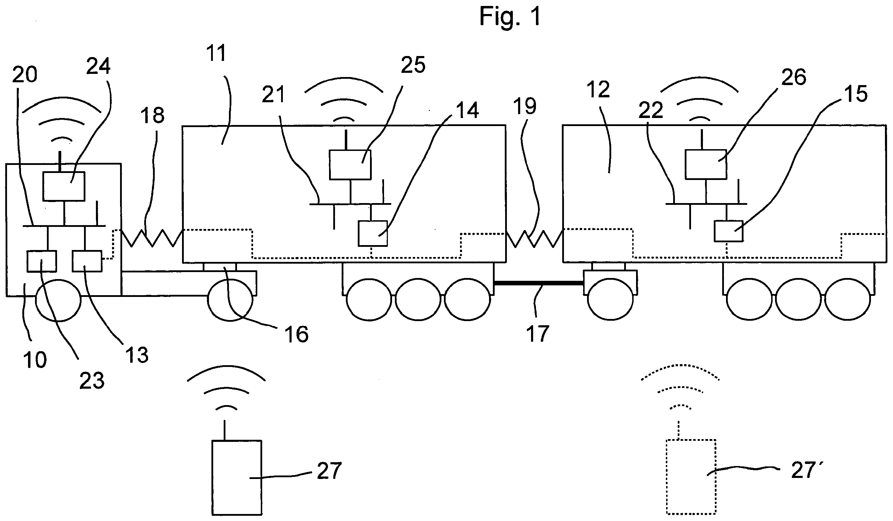

In Fig. 1 ist ein Lastzug schematisch dargestellt, bestehend aus einem ersten Fahrzeug/einer Zugmaschine 10, einem zweiten Fahrzeug/einem ersten Anhänger 11 und einem dritten Fahrzeug/einem zweiten Anhänger 12. Der erste Anhänger 11 ist an die Zugmaschine 10 angehängt und der zweite Anhänger 12 ist an den ersten Anhänger 11 angehängt.

Die Fahrzeuge weisen ein elektronisches Bremssystem mit einer pneumatischen Bremsanlage auf. Entsprechend ist in jedem Fahrzeug ein Steuergerät 13, 14, 15 für das elektronische Bremssystem vorgesehen.

Zusätzlich zu den üblichen Anhängevorrichtungen, Sattel 16 und Deichsel 17 bestehen physische (körperliche) Verbindungen 18, 19 zwischen den Fahrzeugen. Es handelt sich jeweils um elektrische und pneumatische Leitungen, beispielsweise zur Übertragung von pneumatischem Steuerdruck, von Bremslichtsignalen und Bremsbefehlen von der Zugmaschine 10 an die beiden Anhänger 11, 12 und/oder eine CAN-Schnittstelle nach ISO 111992. Die Steuergeräte 13, 14, 15 können direkt oder mittelbar über die Verbindungen 18, 19 einander Signale übermitteln.

In jedem der Fahrzeuge 10, 11, 12 ist das betreffende Steuergerät 13, 14, 15 an einen fahrzeugseitigen CAN-Bus 20, 21, 22 angeschlossen, an dem üblicherweise noch weitere Geräte hängen. In der Zugmaschine 10 sind an den CAN-Bus 20 zumindest noch ein Motor-Steuergerät 23 und eine WLAN-Einheit 24 angeschlossen. Die auf dem CAN-Bus 20 zur Verfügung stehenden Daten können über die WLAN-Einheit 24 einem Funknetzwerk zur Verfügung gestellt werden. Die WLAN-Einheit 24 kann auch in das Steuergerät 13 integriert sein.

In den beiden Anhängern 11, 12 sind ebenfalls WLAN-Einheiten 25, 26 an die CAN-Busse 21, 22 angeschlossen. Auch hier können die WLAN-Einheiten in das jeweilige Steuergerät 14, 15 integriert sein. Die auf den CAN-Bussen 21, 22 vorliegenden Daten können über die WLAN-Einheiten 25, 26 in einem Funk-Netzwerk zur Verfügung gestellt werden.

Grundsätzlich ist jede der WLAN-Einheiten 24, 25, 26 als Access Point mit eigener Funknetzkennung aktiv. Im vorliegenden Fall sind die WLAN-Einheiten 25, 26 der Anhänger 11, 12 umkonfiguriert und verwenden die Funknetzkennung der WLAN-Einheit 24 der Zugmaschine 10. Zugleich sind die WLAN-Einheiten 24, 25, 26 drahtlos, nämlich per WDS (Wireless Distribution System) miteinander verbunden. Dadurch können Nachrichten von der WLAN-Einheit 24 über die WLAN-Einheit 25 an die entfernt liegende WLAN-Einheit 26 drahtlos übermittelt werden, auch wenn die beiden WLAN-Einheiten 24 und 26 für eine ungestörte WLAN-Übertragung zu weit voneinander entfernt sind. Dies ist insbesondere dann der Fall, wenn weitere Anhänger zur Bildung eines Road Trains angehängt werden und ein Fahrzeug-Netzwerk über alle Fahrzeuge aufgebaut werden soll.

Außerdem kann sich ein WLAN-Client 27 mit einer beliebigen der (als Access Point konfigurierten) WLAN-Einheiten 24, 25, 26 verbinden und anschließend entlang der Fahrzeuge bewegen. Der WLAN-Client 27 bleibt stets mit dem Fahrzeug-Netzwerk im Übrigen verbunden. Es muss keine Umstellung auf unterschiedliche Funknetzkennungen von Access Points erfolgen, da in diesem Fall die WLAN-Einheiten 24, 25, 26 als Access Point jeweils dieselbe Funknetzkennung verwenden. Die Bewegung des WLAN-Clients 27 vom ersten Anhänger 11 zum zweiten Anhänger 12 ist in Fig. 1 dargestellt anhand des unten links mit durchgezogenen Linien gezeichneten WLAN-Clients 27 und unten rechts mit gestrichelten Linien gezeichneten WLAN-Clients 27'.

Bei dem WLAN-Client 27 handelt es sich beispielsweise um ein Smartphone eines Fahrers. Das Smartphone weist eine Software für die Kontaktaufnahme mit den WLAN-Einheiten 24, 25, 26 bzw. mit den Steuergeräten 13, 14, 15 auf, etwa nach Art einer vom Hersteller der Steuergeräte über das Internet bereitgestellten App.

An jedem Access Point/jeder WLAN-Einheit 24, 25 26 stehen die Daten des jeweiligen Fahrzeugs zur Verfügung, zumindest über den fahrzeugeigenen CAN-Bus 20, 21, 22. Zwar arbeiten die WLAN-Einheiten 24, 25, 26 jeweils mit derselben Funknetzkennung. Sie weisen aber unterschiedliche Netzwerkadressen (IP-Adressen) auf, so dass eine Unterscheidung der Daten von Fahrzeug zu Fahrzeug möglich ist. Mit entsprechender Software auf dem WLAN-Client 27 können die Daten aus den verschiedenen Fahrzeugen gelesen und verarbeitet werden. Auch können Funktionen gesteuert werden.

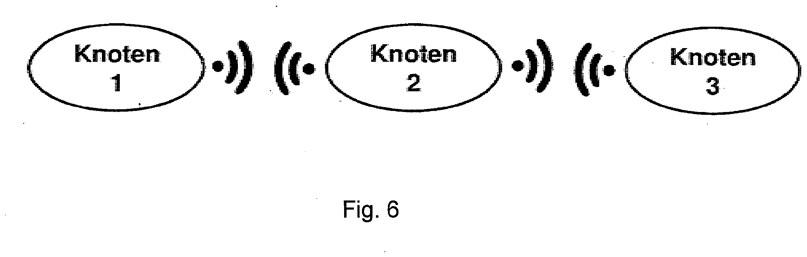

Das dargestellte Fahrzeug-Netzwerk weist ohne den WLAN-Client 27 grundsätzlich eine linienförmige Topologie auf, siehe Fig. 6 mit Knoten 1,2,3 als Access Points in drei miteinander verbundenen Fahrzeugen, z.B. in einem Motorwagen mit zwei Anhängefahrzeugen. Die Anzahl der Fahrzeuge kann aber auch geringer sein als die Anzahl der Knoten/Access Points. So können in einem Fahrzeug mehrere Access Points vorhanden sein.

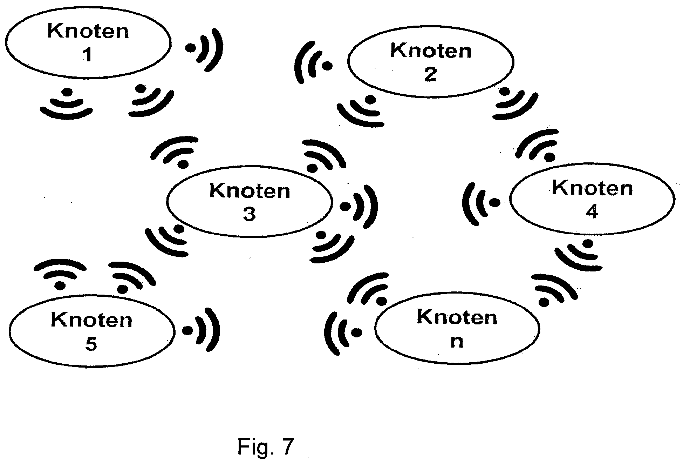

Je nach Reichweite der von den einzelnen WLAN-Einheiten aufgespannten Funknetze können auch Überlagerungen und damit eine vermaschte Topologie vorliegen, siehe Fig. 7 mit 1 bis n Knoten/Access Points , bis hin zu einem vollvermaschten System. In letzterem kommuniziert jeder Access Point direkt und ohne Zwischenstation mit jedem anderen Access Point desselben Netzwerks.

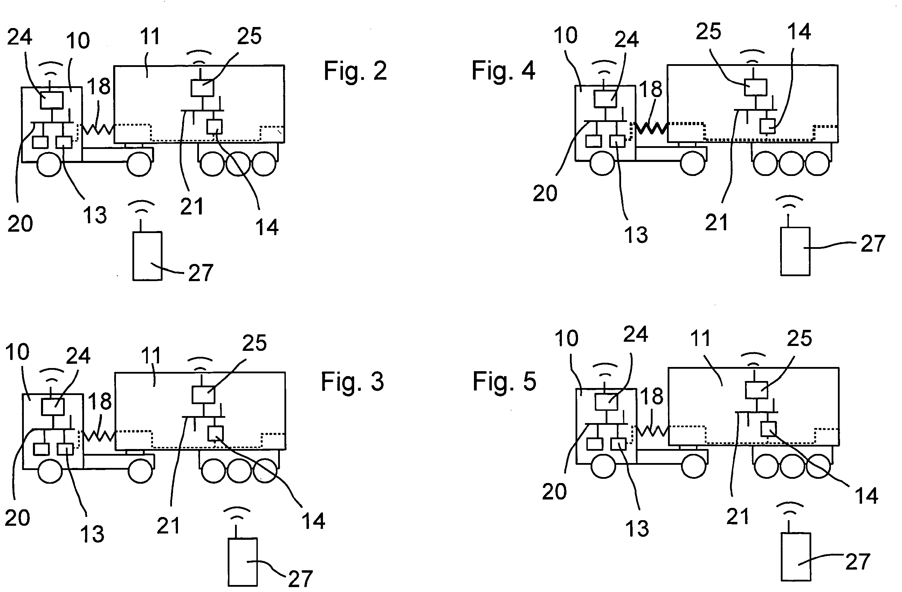

Der Aufbau des Fahrzeug-Netzwerks wird nachfolgend anhand der Figuren 2 bis 5 erläutert:
Zugmaschine 10 und erster Anhänger 11 sind wie in Fig. 1 dargestellt miteinander verbunden. Ein Fahrer oder ein anderer Benutzer begibt sich in die Zugmaschine 10 und schaltet dort die Zündung ein. Damit sind die elektrischen Systeme in der Zugmaschine 10 und im physisch verbundenen ersten Anhänger 11 aktiv.

Der WLAN-Client 27 ist ein Smartphone mit Kamera und Bildverarbeitungssoftware. An der Zugmaschine 10 und am ersten Anhänger 11 sind die WLAN-Verbindungsdaten jeweils als QR-Code auf einer äußeren Fläche angeordnet. Der Benutzer erfasst mit der Kamera seines Smartphones die beiden QR-Codes (Fig. 2). Damit sind die WLAN-Verbindungsdaten von Zugmaschine 10 und erstem Anhänger 11 im Smartphone gespeichert.

Der Benutzer stellt eine Funk-Verbindung vom Smartphone zum ersten Anhänger 11 her, nämlich zur WLAN-Einheit 25 und teilt der WLAN-Einheit 25 mit (Fig. 3), dass diese die Funknetzkennung der Zugmaschine 10 bzw. der WLAN-Einheit 24 übernehmen soll. Daraufhin schaltet sich das WLAN des Anhängers 11 ab und startet erneut, nun mit derselben Funknetzkennung wie die Zugmaschine 10. Es besteht nun ein vorläufiges Fahrzeug-Netzwerk über die Zugmaschine 10 und den ersten Anhänger 11.

Der Benutzer fordert über sein Smartphone eine Autorisierung an, zum Beispiel die Betätigung der Betriebsbremse und/oder das Lösen der Feststellbremse. Der Benutzer/Fahrer oder eine dritte Person begibt sich in die Zugmaschine 10 und führt die angeforderte Aktion durch. Dadurch werden ein geänderter pneumatischer Steuerdruck und/oder ein Bremslichtsignal von der Zugmaschine 10 zum ersten Anhänger 11 übertragen (siehe Fig. 4, fettgedruckte physische Verbindung 18 mit gepunkteter weiterer Verbindung). Die Signale sind vom Steuergerät 14 detektierbar. Das Steuergerät 14 sendet über die WLAN-Einheit 25 an das Smartphone die verlangte Bestätigung. Damit ist sichergestellt, dass die Zugmaschine 10 und der daran physisch angekoppelte erste Anhänger 11 Teile des Fahrzeug-Netzwerks sind. Aus dem vorläufigen Fahrzeug-Netzwerk wird ein dauerhaftes Fahrzeug-Netzwerk, welches solange bestehen bleibt, bis eine Anweisung zur Auflösung folgt und/oder der erste Anhänger 11 von der Zugmaschine 10 getrennt wird.

Sofern die anhand der Fig. 4 erläuterte Bestätigung der physischen Verbindung von Zugmaschine 10 und erstem Anhänger 11 scheitert, wird das gemeinsame Fahrzeug-Netzwerk verworfen. Ein Neuaufbau ist möglich. Vorher sollte die physische Verbindung zwischen Zugmaschine 10 und Anhänger 11 überprüft werden.

Die Autorisierungsanforderung zur Prüfung der physischen Verbindung kann auch automatisiert angefragt werden. Entweder muss der Fahrer manuell aktiv werden (wie hier beschrieben) oder der Vorgang der Signalgenerierung und nachfolgenden Signalprüfung auf der physischen Verbindung erfolgt ebenfalls automatisiert, beispielsweise durch eine Software in dem Access Point, dessen Funknetzkennung von anderen Access Points angenommen werden soll.

In dem dauerhaften Fahrzeug-Netzwerk gemäß Fig. 5 kann der WLAN-Client 27 (Smartphone) über jede der beiden WLAN-Einheiten 24, 25 Zugriff nehmen auf die in den Steuergeräten 13, 14 und den CAN-Bussen 20, 21 vorliegenden Daten. Es ist nicht mehr notwendig, dass der WLAN-Client 27 genau mit der WLAN-Einheit des interessierenden Fahrzeugs verbunden ist. Vielmehr werden die Daten gegebenenfalls von Access Point zu Access Point bis zum WLAN-Client weitergeleitet.

Die Hinzunahme eines weiteren Anhängers (des zweiten Anhängers 12 in Fig. 1) ist in derselben Weise möglich. Im Smartphone sind die Verbindungsdaten der Zugmaschine 10 gespeichert. Das Smartphone erfasst die Verbindungsdaten des weiteren Anhängers und nimmt als WLAN-Client 27 Kontakt auf mit der WLAN-Einheit 26 und teilt dieser mit, dass sie die Funknetzkennung und die Verschlüsselung der WLAN-Einheit 24 verwenden soll. Anschließend schaltet sich die WLAN-Einheit 26 ab und startet erneut, nun mit der Funknetzkennung der WLAN-Einheit 24 der Zugmaschine 10. Zuvor wurde der zweite Anhänger 12 an den ersten Anhänger 11 angekoppelt. Damit ist nun auch eine Autorisierung über die physische Verbindung in der beschriebenen Art möglich.

So können schrittweise weitere Anhänger hinzugefügt werden. Dabei entsteht ein einheitliches Fahrzeug-Netzwerk, selbst wenn die entfernt liegenden Anhänger selbst keine direkte Funkverbindung zur Zugmaschine 10 haben. In dem Verbund aus Zugmaschine und mehreren Anhängern haben die jeweiligen Access Points Zugriff auf die Ihnen bekannten Daten Ihres Fahrzeugs und gleichzeitig auch auf die Daten der anderen Access Points. Damit stehen in einem Fahrzeugverbund erstmals alle notwendigen Fahrzeugdaten in jedem Fahrzeugteil zur Verfügung. Es lassen sich neue Komfort- und Sicherheitsfunktionen realisieren.

Die einzelnen Access Points kommunizieren per WDS (Wireless Distribution System) miteinander im Sinne eines Point-to-Multipoint-Systems. Access Points, die zwischen anderen Access Points liegen, haben dabei die Funktion eines Repeaters im Netzwerk. Vorzugsweise werden Access Points ein und desselben Herstelters verwendet.

Im Fahrzeug-Netzwerk werden die auf dem jeweiligen CAN-Bus zur Verfügung stehenden, in den Steuergeräten vorhandenen und von angeschlossenen Sensoren gelieferten Daten als sogenannter Daten-Layer zur Verfügung gestellt. Angestrebt ist eine möglichst Hersteller-unabhängige Datenübermittlung und Datenverwertung.

In dem beschriebenen Fahrzeug-Netzwerk findet die Kommunikation ausschließlich drahtlos statt. Ein Backbone über Kabel ist nicht vorgesehen. Die beschriebenen physischen Verbindungen 18, 19 dienen nur der Autorisierung beim Aufbau des Fahrzeug-Netzwerks.

## Patentansprüche

1. Verfahren zum Aufbau eines Fahrzeug-Netzwerks aus wenigstens zwei Access Points und einem WLAN-Client, **gekennzeichnet durch** folgende Schritte:
a) der WLAN-Client (27) erfasst Verbindungsdaten eines Access Points eines ersten Fahrzeugs (10) und eines Access Points eines zweiten Fahrzeugs (11), jeweils umfassend eine Funknetzkennung des jeweiligen Access Points,
b) der WLAN-Client (27) verbindet sich mit dem Access Point des zweiten Fahrzeugs (11),
c) der WLAN-Client (27) sendet die Verbindungsdaten des Access Points des ersten Fahrzeugs (10), einschließlich der Funknetzkennung des Access Points des ersten Fahrzeugs (10), an den Access Point des zweiten Fahrzeugs (11),
d) der Access Point des zweiten Fahrzeugs (11) nimmt die Funknetzkennung des Access Points des ersten Fahrzeugs (10) an, verbindet sich mit dem Access Point des ersten Fahrzeugs (10) per WDS und bildet so mit dem Access Point des ersten Fahrzeugs (10) ein einziges für den WLAN-Client (27) sichtbares Netzwerk.

2. Verfahren nach Anspruch 1, **dadurch gekennzeichnet, dass** bei Einbeziehung eines weiteren Fahrzeugs (12) folgende Schritte durchgeführt werden:
a) der WLAN-Client (27) verbindet sich mit einem Access Point des weiteren Fahrzeugs (12),
b) der WLAN-Client (27) sendet die Verbindungsdaten des Access Points des ersten Fahrzeugs (10) einschließlich der Funknetzkennung des Access Points des ersten Fahrzeugs (10) oder die Verbindungsdaten des Access Points des zweiten Fahrzeugs (11) einschließlich der Funknetzkennung des Access Points des zweiten Fahrzeugs (11) an den Access Point des weiteren Fahrzeugs (12),
c) der Access Point des weiteren Fahrzeugs (12) nimmt die Funknetzkennung der Access Points des Netzwerks an, verbindet sich mit wenigstens einem der Access Points des ersten Fahrzeugs (10) und des zweiten Fahrzeugs (11) per WDS und wird so Teil des für den WLAN-Client (27) sichtbaren Netzwerks.

3. Verfahren nach Anspruch 1 oder 2, **dadurch gekennzeichnet, dass** die Fahrzeuge (10, 11, 12) auch physisch miteinander verbunden sind, dass nach dem Aufbau einer WLAN-Verbindung zwischen den Access Points zweier Fahrzeuge geprüft wird, ob auch Signale zwischen den beiden Fahrzeugen über physische Leitungen übertragbar sind, und dass die WLAN-Verbindung zwischen den Access Points nur beibehalten wird, wenn die Prüfung der Übertragung von Signalen über die physischen Leitungen erfolgreich ist.

4. Verfahren nach Anspruch 1 oder einem der weiteren Ansprüche, **dadurch gekennzeichnet, dass** der WLAN-Client (27) die Verbindungsdaten des Access Points eines der Fahrzeuge wenigstens mittelbar drahtlos erfasst, insbesondere per Funk oder optisch mit einer Kamera.

5. Verfahren nach Anspruch 1 oder einem der weiteren Ansprüche, **dadurch gekennzeichnet, dass** der WLAN-Client (27) die Verbindungsdaten des Access Points eines der Fahrzeuge (10, 11, 12) von einem Server lädt und dass der Zugriff auf den Server unter Verwendung der vom WLAN-Client (27) zuvor drahtlos erfassten Daten erfolgt.

## Claims

1. Method for establishing a vehicle network from at least two access points and a WLAN client, **characterized by** the following steps:
a) the WLAN client (27) acquires connection data of an access point of a first vehicle (10) and of an access point of a second vehicle (11), in each case comprising a radio network identifier of the relevant access point,
b) the WLAN client (27) connects to the access point of the second vehicle (11),
c) the WLAN client (27) sends the connection data of the access point of the first vehicle (10), including the radio network identifier of the access point of the first vehicle (10), to the access point of the second vehicle (11),
d) the access point of the second vehicle (11) accepts the radio network identifier of the access point of the first vehicle (10), connects to the access point of the first vehicle (10) via WDS and thus forms a single network visible to the WLAN client (27) with the access point of the first vehicle (10).

2. Method according to claim 1, **characterized in that** the following steps are carried out if a further vehicle (12) is included:
a) the WLAN client (27) connects to an access point of the further vehicle (12),
b) the WLAN client (27) sends the connection data of the access point of the first vehicle (10), including the radio network identifier of the access point of the first vehicle (10), or the connection data of the access point of the second vehicle (11), including the radio network identifier of the access point of the second vehicle (11), to the access point of the further vehicle (12),
c) the access point of the further vehicle (12) accepts the radio network identifier of the access points of the network, connects to at least one of the access points of the first vehicle (10) and the second vehicle (11) via WDS and thus becomes part of the network visible to the WLAN client (27).

3. Method according to either claim 1 or claim 2, **characterized in that** the vehicles (10, 11, 12) are also physically connected to one another, **in that,** after a WLAN connection has been established between the access points of two vehicles, a check is made as to whether signals can also be transmitted between the two vehicles via physical lines, **and in that** the WLAN connection between the access points is only maintained if the check of the transmission of signals via the physical lines is successful.

4. Method according to claim 1 or any of the further claims,
**characterized in that** the WLAN client (27) acquires the connection data of the access point of one of the vehicles at least indirectly in a wireless manner, in particular by radio or optically by means of a camera.

5. Method according to claim 1 or any of the further claims,
**characterized in that** the WLAN client (27) loads the connection data of the access point of one of the vehicles (10, 11, 12) from a server, **and in that** the server is accessed using the data previously wirelessly acquired by the WLAN client (27).

## Revendications

1. Procédé permettant la création d'un réseau de véhicules à partir d'au moins deux points d'accès et d'un client WLAN, **caractérisé par** les étapes suivantes :
a) le client WLAN (27) détecte des données de connexion d'un point d'accès d'un premier véhicule (10) et d'un point d'accès d'un deuxième véhicule (11), comprenant respectivement un indicatif de réseau radio du point d'accès respectif,
b) le client WLAN (27) se connecte au point d'accès du deuxième véhicule (11),
c) le client WLAN (27) envoie les données de connexion du point d'accès du premier véhicule (10), y compris l'indicatif de réseau radio du point d'accès du premier véhicule (10), au point d'accès du deuxième véhicule (11),
d) le point d'accès du deuxième véhicule (11) reçoit l'indicatif de réseau radio du point d'accès du premier véhicule (10), se connecte au point d'accès du premier véhicule (10) par WDS et forme ainsi, avec le point d'accès du premier véhicule (10), un seul réseau visible pour le client WLAN (27).

2. Procédé selon la revendication 1, **caractérisé en ce que,** en cas d'insertion d'un autre véhicule (12), les étapes suivantes sont mises en oeuvre :
a) le client WLAN (27) se connecte à un point d'accès de l'autre véhicule (12),
b) le client WLAN (27) envoie les données de connexion du point d'accès du premier véhicule (10), y compris l'indicatif de réseau radio du point d'accès du premier véhicule (10), ou les données de connexion du point d'accès du deuxième véhicule (11), y compris l'indicatif de réseau radio du point d'accès du deuxième véhicule (11), au point d'accès de l'autre véhicule (12),
c) le point d'accès de l'autre véhicule (12) reçoit l'indicatif de réseau radio des points d'accès du réseau, se connecte à au moins l'un des points d'accès du premier véhicule (10) et du deuxième véhicule (11) par WDS et fait ainsi partie du réseau visible pour le client WLAN (27).

3. Procédé selon la revendication 1 ou 2, **caractérisé en ce que** les véhicules (10, 11, 12) sont également reliés physiquement les uns aux autres, **en ce qu'**est vérifié, après la création d'une connexion WLAN entre les points d'accès de deux véhicules, si des signaux peuvent également être transmis entre les deux véhicules par l'intermédiaire de câbles physiques, **et en ce que** la connexion WLAN entre les points d'accès n'est maintenue que si la vérification de la transmission de signaux par l'intermédiaire des câbles physiques se réalise avec succès.

4. Procédé selon la revendication 1 ou l'une des autres revendications, **caractérisé en ce que** le client WLAN (27) détecte les données de connexion du point d'accès de l'un des véhicules au moins indirectement sans fil, en particulier par radio ou de manière optique avec une caméra.

5. Procédé selon la revendication 1 ou l'une des autres revendications, **caractérisé en ce que** le client WLAN (27) télécharge les données de connexion du point d'accès de l'un des véhicules (10, 11, 12) à partir d'un serveur et **en ce que** l'accès au serveur est réalisé en utilisant les données préalablement détectées sans fil par le client WLAN (27).
